# EUROPEAN PATENT APPLICATION

(11) **EP 0 723 358 A2**
(43) Date of publication of application: **24.07.1996**
(21) Application number: 96300316.5
(22) Date of filing: 17.01.1996
(51) Int. Cl.: H04M 11/00

(54) **Method and apparatus for automatic meter reading and local communication**

(30) Priority: 19.01.1995 US 375347
(71) Applicant: AMERICAN INNOVATIONS, LTD, Austin, Texas 78758 (US)
(72) Inventor: Davis, Donald J., Austin, Texas 78729 (US)
(74) Representative: Harris, Ian Richard

(57) **Abstract**

A method and apparatus for automatic meter reading and local communication are provided in which a meter reader (16) automatically reads a meter (14). The meter reader (16) is coupled to a local communications network (18). Powered devices (22 and 24) are also coupled to the local communications network (18). Furthermore, a load controller (26) and a gateway (28) are also coupled to the local communications network (18). The gateway (28) is coupled to a telecommunications network (30), as is a central host (10).

## Description

This invention relates generally to electronic circuits, and more particularly to a method and apparatus for automatic meter reading and local communication.

Utility companies typically measure consumption through the use of meters located at the place of consumption, for example a home or business. Such meters include electric power meters, water meters, and gas meters, among other possibilities. Although most meters are still manually read by employees of the utility, more and more meters are automatically read through the use of electronic meter readers that collect consumption information and then transmit it to the utility over the telephone lines.

Communication with automatic meter readers over telephone lines presents various drawbacks. For example, scheduling transmission times can be troublesome, particularly if the automatic meter reader does not have a dedicated line, since the consumer may be using the telephone at the scheduled time for consumption data transmission. If dedicated telephone lines are used, expenses are increased. Furthermore, coupling automatic meter readers to telephone lines has resulted in isolation of the remote meter reader from other components within the consumer's location. Because of this isolation, communications between the remote meter reader and other components at the consumer's location has been unavailable.

Because most utility meters are built to specific specifications, and automatic meter readers are "add-ons," the automatic meter readers must be designed to fit within the meter and not interfere with its operation.

Therefore, needs have arisen for a method and apparatus for automatic meter reading that also allows for communication with other components at a consumer's location. Furthermore, a need has arisen for an improved circuit and method for automatically reading a meter.

In accordance with the teachings of the present invention, a method and apparatus for automatic meter reading and local communication are provided which substantially eliminate or reduce problems and disadvantages associated with prior art systems.

In particular, a system for automatic transmission of meter readings is provided which includes a local communications network. A meter is operable to measure a consumption of a product, such as electric energy. An automatic meter reader is operable to record consumption information based on the meter, the meter reader being coupled to the local communications network. Also provided is a telecommunications network and a gateway coupled between the local communications network and the telecommunications network. The gateway is operable to translate data into appropriate formats for the local communications network and the telecommunications network. A central host is coupled to the telecommunications network and receives consumption information from the meter reader across the local communications network and the telecommunications network.

Also provided is an automatic meter reader for reading a meter, in which the meter has a rotating disc with reflective and non-reflective areas. A light source transmits light to the reflective and non-reflective areas. A processor is coupled to the light source and causes the light source to periodically transmit pulses of light. A phototransistor receives reflected light from the disc and generates a light signal based on the amount of reflected light. A comparator with hysteresis is coupled to the phototransistor, the comparator operable to change states in response to predetermined changes in the level of the light signal.

Also provided is a method of automatically transmitting meter readings which includes metering consumption of a product at a meter, such as electric power. The method also includes automatically reading and storing consumption information based on the meter, and transmitting the consumption information to a local communications network. The consumption information is translated from the local communications network to a telecommunications network, and received at a central host from the telecommunications network.

A technical advantage of an embodiment of the invention is the fact that it allows for transmission of consumption information across a local communications network. Thus, the consumption information can be used by other devices on the local communications network, such as a load controller.

Another technical advantage of an embodiment of the invention is the fact that the local communications network is coupled to a telecommunications network. This allows a central host, such as a utility company, to access the local communications network and thus retrieve consumption information and download various commands, both to the automatic meter reader and to other devices, such as load controllers. Furthermore, when the telecommunications network is a dedicated network, instantaneous access, with virtually no scheduling difficulties, can be had to the local communications network from the central host.

For a more complete understanding of the present invention and the advantages thereof, reference is now made to the following description of exemplary embodiments of the invention taken in conjunction with the accompanying drawings in which like reference numbers indicate like features and wherein:
FIGURE 1 illustrates a block diagram of a system including an automatic meter reader allowing for local communication;
FIGURE 2 illustrates a block diagram of an automatic meter reader and local communications network;
FIGURE 3 illustrates a schematic of a circuit for automatically reading a meter;
FIGUREs 4A-4D illustrate exemplary wave forms for the circuit shown in FIGURE 3; and
FIGURE 5 illustrates a flow diagram of particular data transfers for the system shown in FIGURE 1.

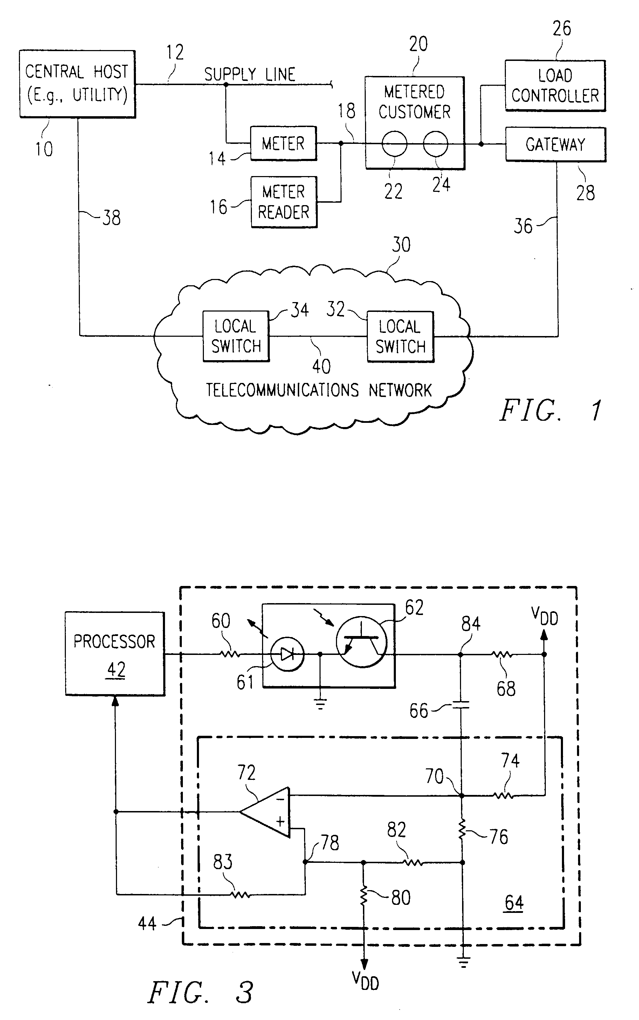

FIGURE 1 illustrates a block diagram of a system that allows for automatic meter reading and local communication according to the teachings of the present invention. As shown in FIGURE 1, a central host 10 provides a supply through supply line 12. Central host 10 is typically a utility, although any other source which supplies a metered product is contemplated by the present invention. For clarity, the example of a utility supplying electric power will be described below. Thus, supply line 12 represents power lines for supplying electric power. It being understood, however, that supply line 12 represents other types of supply lines as well, such as gas lines, water pipes, or other supply lines.

As shown in FIGURE 1, a meter 14 is coupled to supply line 12. Typically, meter 14 is located at the consumer's location which may be, for example, a residence or business. Most residences and businesses have electric power utility meters for measuring the amount of energy consumed at the location. An automatic meter reader 16 is associated with the meter 14 for automatically reading the meter 14. Meter reader 16 is typically located within the housing of meter 14.

The meter reader 14 is also coupled to line 18, which represents a link for local data communications across a local communications network. Although link 18 may be any link suitable for data transmission (whether digital or analog), such as coaxial cable, twisted pair, or other cables, it is preferably the electric power lines that supply electricity throughout a consumer's location. Using these existing power lines for data transmission provides significant advantages, since they provide an in-place local network for data communications. By using these already-existing power lines, the costly addition of dedicated communications lines within a locality is avoided. With line 18 representing the electric power lines as shown in FIGURE 1, the line 18 runs from the meter 14 through the location 20 (e.g., a residence or business). Shown within location 20 are devices 22 and 24 coupled to the line 18. Also coupled to line 18 is a load controller 26 and gateway 28. Gateway 28 is coupled to telecommunications network 30, which is also coupled to the central host 10. Telecommunications network 30 includes local switches 32 and 34. Although load controller 26, gateway 28, and meter reader 16 are shown as separate elements, they can be combined, for example in a single unit performing the functions of each.

In operation, automatic meter reader 16 reads the consumption level metered by meter 14. This data is then available to the utility (central host 10) via the line 18, gateway 28, and telecommunications network 30.

By coupling meter reader 16 to a local communications network, it can then communicate with other devices, such as load controller 26, and devices 22 and 24. In this way, the information from meter reader 16 can be accessed, and the operation of meter reader 16 can be controlled. A particular example includes communication between meter reader 16 and load controller 26. Load controller 26 is a processor controlled unit, and can request from meter reader 16 information on substantially current power consumption. If this power consumption is above a predetermined set point within load controller 26, load controller 26 operates to reduce the power consumption by modulating or turning off various devices within the location 20, such as devices 22 and 24. For example, load controller 26 may operate to turn off (or adjust the temperature setting of) an HVAC system or a water heater, which are coupled to the local network through line 18, and are responsive to control from the load controller 26. It should be understood that other types of data transfers may be made within the local communications network, in addition to that described above in connection with load control.

It should be understood that any type of local communications network may be used to allow for communications between meter reader 16 and the various devices at location 20, such as gateway 28, load controller 26, and devices 22 and 24. However, as described above, it is convenient and cost effective to use the power lines of the location 20, since they are in place. Such other networks may be based on twisted pair cables, coaxial cables, other cables suitable for data communications, radio frequency transmission systems, and others.

As shown in FIGURE 1, gateway 28 provides a link between the local communications network at the location 20 and the telecommunications network 30. In a particular embodiment, gateway 28 includes logic circuitry for converting data from a format suitable for line 18 to a format suitable for line 36, and vice versa. Gateway 28 may also include buffering capabilities, as needed, to accommodate different data rates between the local communications network and the telecommunications network. Similarly, gateway 28 may include other circuitry, such as a processor, for implementing any communications protocols that may be used.

In a particular embodiment, telecommunications network 30 may be a dedicated telecommunications network, such as that developed by First Pacific Network Corporation. In such an example, lines 36 and 38 may be coaxial cable, and line 40 a fiber optic cable. Local switches 32 and 34 allow for multiplexing multiple lines 36 and 38 into fiber optic cable 40. In such an example, there is typically one local switch 32 per neighborhood, and thus local switch 32 receives and transmits information from and to a plurality of gateways 28.

With a dedicated telecommunication network 30, the central host can have instantaneous access to the meter reader 16. Thus, there are no scheduling conflicts, such as may arise with a public telephone network, and the utility company can access the reader at any time. This is important both for reading information from the meter reader 16 and for downloading instructions, as will be discussed below.

It should be understood, however, that telecommunications network 30 may be any type of network, dedicated or public. For example, network 30 may be a public telecommunications network, such as the telephone system. In that case, gateway 28 comprises a transceiver for calling and receiving calls. For example, gateway 28 may transmit and receive digital data directly over a digital public telecommunications network, or, through the use of a modem or other suitable technology, across the analog public telephone network.

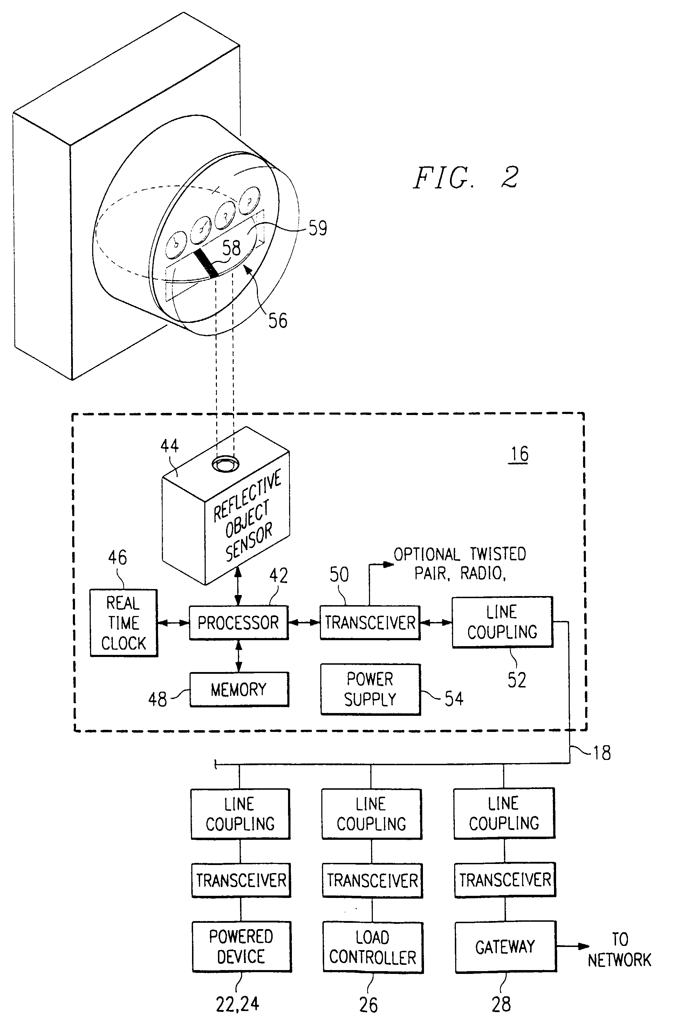

FIGURE 2 illustrates a block diagram of meter reader 16 and the local communications network. As shown in FIGURE 2, meter reader 16 includes a processor 42 coupled to various devices. In particular, processor 42 is coupled to a reflective object sensor 44, a real time clock 46, a memory 48, and a transceiver 50. Transceiver 50 is also coupled to line coupling 52. A power supply 54 is provided for powering the various elements within meter reader 16. Line coupling 52 is coupled to line 18, which as discussed, forms the link for the local communications network. Coupled to line 18 are powered devices 22 and 24, load controller 26, and gateway 28. Each of these devices are coupled to line 18 through transceiver and line coupling circuits, similar to transceiver 50 and line coupling circuit 52 of meter reader 16.

Also shown in FIGURE 2 is disc 56 of meter 14. Disc 56 includes non-reflective area 58 and reflective area 59. The reflective sizes of these areas may be reversed, or changed, without departing from the intended scope herein. Typical meters include a rotating disc, such as disc 56, which is used to measure consumption. By recording the number of rotations of the disc, the consumption level can be determined.

In operation of the automatic meter reader 16, reflective object sensor 44 transmits light pulses, for example in the form of infrared light, toward disc 56. This light is either reflected or not reflected back to reflective object sensor 44. In particular, light will not be reflected when it is focused upon non-reflective area 58. Reflective object sensor 44 outputs a signal based on whether it is receiving or not receiving reflected light. Processor 42 receives the output signal from reflective object sensor 44 to determine the frequency and number of rotations of disc 56. With one non-reflective area 58, it will be encountered once per disc revolution.

By calculating the rotational frequency of the disc, processor 42 determines the instantaneous power usage at the location 20. Furthermore, by continuously counting the number of rotations of the disc, processor 42 records the amount of energy consumed at the location 20. This information is stored within memory 48. Processor 42 operates based on instructions which are also stored in memory 48. It should be understood that memory 48 may be a combination of random access memory and read-only memory for data storage and the instruction storage, respectively. Furthermore, memory 48 can be used to store other information, such as requests or commands received from the local communications network via line 18. Such requests or commands may be generated by load controller 26, any other device coupled to the local communications network, or by the electric utility and received through the gateway 28, as will be discussed below.

Because electric utilities typically charge different rates depending on the time of day that energy is consumed, processor 42 stores consumption information in such a way that it is associated with the time of day the product was consumed. Thus, for example, processor 42 breaks each day into a plurality of shorter periods, for example corresponding to the times in which the utility imposes peak rates, off peak rates, and shoulder rates. Realtime clock 46 shown in FIGURE 2 is accessed by processor 42 to determine the time of day for such storage techniques. It should be understood, however, that processor 42 is operable to store consumption information in any form suitable for use by the utility supplying the metered product.

Processor 42 transmits the consumption data (stored in memory 48) to the utility (central host 10) in response to an event, such as a particular time of day, or in response to a request from the utility (or other request). This data is transmitted through transceiver 50 and line coupling 52 onto line 18, and then through the gateway 28 to the telecommunications network 30 and finally to the central host 10. As shown in FIGURE 2, and as discussed above, transceiver 50 need not transmit and receive data only across the power lines of the location 20. Other links for the local communications network may be used, such as twisted pair, coaxial cables, or radio frequency systems, among others.

As shown in FIGURE 2, the powered devices 22 and 24 and load controller 26 are also coupled to line 18, and thus can communicate with meter reader 16 as discussed above. Moreover, because load controller 26 is coupled to the same local communications network as gateway 28, load controller 26 may receive commands from the utility to control the power usage at the location 20. For example, the utility may issue a command to load controller 26 instructing it to limit the power consumption of the location 20 to a particular level. Load controller 26 can then request the current power consumption from meter reader 16, and, if the power consumption is above that allowed by the utility, load controller 26 can operate to reduce power consumption by turning off or modulating various powered devices 22 and 24.

In a particular embodiment, in which the local communications network comprises the electric power lines at a location, the transceiver 50 may comprise the PLT-20 transceiver chip, part number 50090-01, manufactured by the Echelon® Corporation. The processor 42 may be a microprocessor or microcontroller, such as those readily available on the market today. In a particular example, the processor 42 may comprise the MC143150FU microcontroller manufactured by Motorola for Echelon® Corporation. Such a microcontroller is commonly referred to as the Echelon® Neuron Processor.

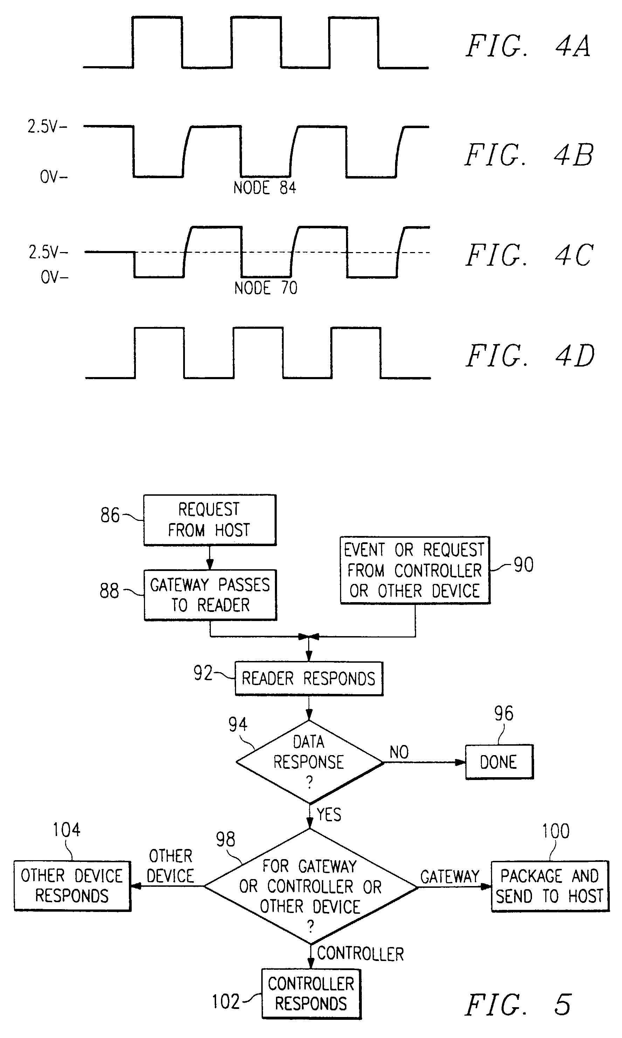

FIGURE 3 illustrates a schematic of a circuit for reflective object sensor 44. As shown in FIGURE 3, processor 42 is coupled through a resistor 60 to LED 61 which is used for transmitting light to the disc 56. Reflected light is received at a phototransistor 62. LED 61 and phototransistor 62, in a particular example, may be a single package, such as that manufactured by Honeywell, Part No. HOA0149-001. It should be understood, however, that discrete components or other photo transmitters (light sources) and receivers may be used without departing from the intended scope of the present invention. The phototransistor 62 is capacitively coupled to a comparator circuit 64 through capacitor 66, which may have a capacitance of 0.1 µF. The emitter of the phototransistor 62 is tied to ground, and the collector, which is coupled to capacitor 66, is pulled up to VDD (which may be approximately 5 volts, although other voltages may be used) through resistor 68. Resistor 68 may be a 10 kΩ resistor. Resistor 60 may be a 470 Ω resistor.

A particular circuit configuration for comparator 64 is shown in FIGURE 3. It should be understood, however, that other circuit configurations for comparator 64 may be used without departing from the intended scope of the present invention. In the particular embodiment shown in FIGURE 3, node 70, which is coupled to an input of an operational amplifier ("op amp") 72, is biased by resistors 74 and 76 to a preset voltage. In a particular embodiment, resistors 74 and 76 are each 100 kΩ, and thus node 70 is biased to approximately 2.5 volts for a VDD equal to approximately 5 volts. Node 78, coupled to the other input of op amp 72, is biased to the same voltage as node 70, through the use of biasing resistors 80 and 82. In a particular example, resistors 80 and 82 are 10 kΩ each, and thus node 78 is biased to approximately 2.5 volts. Node 78 is also coupled to the output of op amp 72 through resistor 84, which may be 100 kΩ. The output of op amp 72 is also coupled to processor 42.

In operation, processor 42 pulses the LED 61 at approximately 1000 cycles per second, although other frequencies may be used. The circuit 16 is located far enough away from the disc 56 so that the phototransistor 62 operates in the linear range. This distance is approximately .75 inches, although other distances may be used as well. Although the phototransistor 62 could be placed close enough to the disc 56 such that it operates only in the non-linear switching range, typical meters are constructed such that it is difficult to place the detector that close to the disc 56.

With the phototransistor 62 operated in the linear range, it is off when there is no light, and begins to turn on as light increases. Thus, with ambient light, it is partially on, thus pulling node 84 slightly down. The signal at node 84 is a light signal. When reflected light is received from the LED 61, the phototransistor 62 is completely on, thus pulling node 84 to ground. When it is completely dark, the phototransistor 62 is off, and node 84 is pulled up to VDD through pull-up resistor 68. Because the light signal from the phototransistor 62 attributable to ambient light is unwanted, node 84 is capacitively coupled to node 70 through capacitor 66, and the DC component at node 84 attributable to ambient light is filtered off. Therefore, node 70 tracks the AC signal received from the phototransistor 62 attributable only to the light received from the pulsed LED.

The waveforms of FIGUREs 4A-4D illustrate operation of the reflective object sensor 44. FIGURE 4A illustrates a waveform of the voltage pulses that drive the LED 61. The peak of this voltage may be any voltage suitable for driving the LED, and a particular example is 5 volts.

FIGURE 4B illustrates a typical voltage occurring at node 84. As shown in FIGURE 4B, the waveform begins at approximately 2.5 volts. This is the DC voltage that is attributable to ambient light causing phototransistor 62 to partially turn on. If it were completely dark, phototransistor 62 would be turned off, and the beginning voltage at node 84 would be approximately VDD, or five volts. When reflected light is received at phototransistor 62 from LED 61, phototransistor 62 is turned hard on, thus pulling node 84 to ground, as shown in the waveform of FIGURE 4B. When LED 61 is off, no reflected light is received, and node 84 returns to the level resulting from ambient light. As discussed above, when the light from LED 61 falls upon the non-reflective area 58 of disc 56, no reflected light is received, and the voltage at node 84 would have no AC component until light is again reflected from the disc 56. In a particular example, non-reflective area 58 may be five to ten degrees wide. With a disc rotating at approximately two revolutions per second, and reflective object sensor 44 generating 1000 pulses per second, the non-reflective area 58 will result in approximately 7-14 cycles of no reflected light.

FIGURE 4C illustrates a typical voltage that would appear at node 70. As shown in FIGURE 4C, the voltage at node 70 is centered about the biasing point, which as discussed above may be approximately 2.5 volts. The AC component that passes through capacitor 66 results in the voltage at node 72 oscillating above and below the biasing point, as shown in FIGURE 4C. Op amp 72 is configured as a comparator with hysteresis. Therefore, its output changes state (FIGURE 4D) only when the voltage at node 70 crosses the biasing point by more than a predetermined voltage (which corresponds to changes in the level of received light). In a particular example, that predetermined voltage is approximately .25 volts. The output of comparator 64 will have the same frequency as the light pulses from LED 61 while they are reflected, and the output of comparator 64 will be constant when light is not reflected due to non-reflective area 58.

The processor 42 reads the output of comparator 64 to determine the number and frequency of the disc rotations. In one technique, the processor 42 measures the frequency of the toggling of the comparator output, and a change in this frequency (for example, from 1000 Hz to 0 Hz) corresponds to times when light is not reflected because of non-reflective area 58. The rotational frequency of the disc 56 corresponds to the period of these comparator frequency changes. The number of disc rotations corresponds to the number of times the comparator frequency changes.

FIGURE 5 illustrates a flow diagram for data communication with meter reader 16 across the network shown in FIGURE 1. As shown in FIGURE 5, the host can issue a request a block 86. This request may be in the form of a request for a download of consumption information recorded by meter reader 16, or some other request or command. For example, the host 10 may issue an instruction informing the meter reader 16 that a particular rate, such as a critical rate, will be charged for energy consumed during a particular period. Thus, the meter reader 16 would then store energy consumption for that time period such that it is identifiable to the host. At block 88, such requests or instructions are passed from the gateway 28 to the meter reader 16 at block 88. Similarly, as shown at block 90, some predetermined event, such as a time of day, or a request from another device, such as a load controller 26 or other device, may be generated at the local communications network. Any of these requests or instructions are passed to the meter reader 16 across the local communications network (or from within the meter reader itself).

At block 92, the reader responds to these requests or events accordingly. At block 94, for example, the reader may respond by transmitting data across the local communications network. If no such response is needed, such as when a new rate for a particular time period has been downloaded from the host to the reader, the reader stores the new information, and the data transfer is completed (block 96). If the meter reader 16 does transmit data across the local communications network, it will be routed to the appropriate recipient, such as by addressing, at block 96. Thus, at block 96 the various devices on the network will determine whether the data is addressed to them. If the data is for the gateway 28 (and perhaps ultimately for the host) then the gateway 28 will respond by receiving the data from the meter reader 16, and packaging it in a form appropriate for the telecommunications network 30 and transmit it to the telecommunications network 30 for receipt by the central host 10. This is shown at block 98. Similarly, if the data is addressed to the load controller 26, the load controller 26 will respond at block 100. As discussed above, such a situation may involve the transfer of current power consumption from the meter reader 16 to the load controller 26 in response to the request from the load controller 26. As shown at block 102, other devices may be in communication with the meter reader 16 and may be addressed to receive information from the meter reader 16.

As discussed above at block 90, some event, such as time of day, may trigger a response by the meter reader 16. Such an event may be an event within the meter reader 16, for example, a time of day. At this time of day event, the meter reader 16 may transmit consumption information to the host or to some other device. As another event example, the meter reader may request an updated time of day from another time of day clock, for example located in gateway 28. This will ensure that the time of day clocks throughout the system are synchronized.

Although embodiments of the invention have been described herein, it should be understood that various modifications, alterations, and substitutions can be made without departing from the scope of the invention.

## Claims

1. A system for automatic transmission of meter readings, comprising:
a local communications network comprising electric power lines that supply electricity in a consumer location, said local communication network operable to allow communication of information in said consumer location;
a meter operable to measure consumption of a product;
a meter reader operable to record consumption information based on said meter, said meter reader coupled to said local communications network and operable to transmit said consumption information on said local communications network;
a telecommunications network;
a gateway coupled between said local communications network and said telecommunications network, said gateway operable to translate data into appropriate formats for said local communications network and said telecommunications network, and said gateway operable to receive said consumption information from said local communications network and transmit said consumption information on said telecommunications network; and
a central host coupled to said telecommunications network and operable to receive said consumption information from said meter reader communicated across said local communications network and said telecommunications network.

2. A system according to Claim 1, wherein said product is electric energy.

3. A system according to Claim 1 or Claim 2, wherein said meter reader comprises:
a line coupling circuit coupled to said local communications network; and
a transceiver coupled to said line coupling circuit.

4. A system according to any preceding Claim, wherein said gateway comprises:
a line coupling circuit coupled to said local communications network; and
a transceiver coupled to said line coupling circuit.

5. A system according to any preceding Claim, wherein said product is electric energy, and further comprising a load controller coupled to said local communications network, said load controller operable to control the amount of energy consumed.

6. A system according to Claim 5, wherein said meter reader is operable to transmit information on substantially current energy consumption to said load controller.

7. A system according to any preceding Claim, wherein said meter reader is operable to receive rate information from said central host and store consumption information in accordance with said rate information.

8. A system according to any preceding Claim, wherein said meter reader comprises:
a reflective object sensor operable to transmit light and receive reflected light from said meter; and
a processor operable to record said consumption information based on said reflected light.

9. A system according to Claim 8, wherein said meter includes a rotating disc, said disc including a reflective area and a non-reflective area, said reflective object sensor transmitting light to said reflective and non-reflective areas, each rotation of said disc ccrresponding to a predetermined amount of consumption.

10. A system according to Claim 9, wherein said reflective object sensor further comprises:
a light emitting diode operable to transmit said light, said processor causing said diode to periodically transmit pulses of light;
a phototransistor operable to receive reflected light from said disc and generate a light signal based on the amount of reflected light;
a comparator with hysteresis coupled to said phototransistor, said comparator operable to change states in response to predetermined changes in the level of said light signal.

11. A system according to Claim 10, wherein said phototransistor responds substantially linearly to the amount of light received by said phototransistor to which said phototransistor is sensitive.

12. A system according to Claim 10 or Claim 11, wherein said comparator is capacitively coupled to said phototransistor, such that any portion of said light signal attributable to ambient light is filtered from said comparator.

13. An automatic meter reader for reading a meter, said meter having a rotating disc, said disc including a reflective area and a non-reflective area, said automatic meter reader comprising:
a light source operable to transmit light to said reflective and non-reflective areas;
a processor coupled to said light source and operable to cause said light source to periodically transmit pulses of light;
a transceiver coupled to said processor;
a line coupling circuit coupled to said transceiver, said line coupling circuit operable to couple to a local communications network comprising electric power lines that supply electricity in a consumer location;
said processor further operable to communicate information on said local communications network through said transceiver and said line coupling circuit;
a phototransistor operable to receive reflected light from said disc and generate a light signal based on the amount of reflected light; and
a comparator with hysteresis coupled to said phototransistor, said comparator operable to change states in response to predetermined changes in the level of said light signal.

14. A meter reader according to Claim 13, wherein said phototransistor responds substantially linearly to the amount of light received by said phototransistor to which said phototransistor is sensitive.

15. A meter reader according to Claim 13 or 14, wherein said comparator is capacitively coupled to said phototransistor, such that any portion of said light signal attributable to ambient light is filtered from said comparator.

16. A method of automatically transmitting meter readings, comprising:
metering consumption of a product at a meter;
automatically reading and storing consumption information based on the meter;
transmitting the consumption information in a consumer location on a local communications network comprising electric power lines that supply electricity in said consumer location;
translating the consumption information from the local communications network to a telecommunications network; and
receiving the consumption information at a central host from the telecommunications network.

17. A method according to Claim 16, wherein the product is electric energy.

18. A method according to Claim 16, wherein the product is electric energy, and further comprising controlling the amount of energy consumed by transmitting commands across the local communications network.

19. A method according to any one of Claims 16 to 18, and further comprising transmitting information on substantially current energy consumption across the local communications network.

20. A method according to any one of Claims 16 to 19, and further comprising receiving rate information from the central host at the local communications network and storing consumption information in accordance with the rate information.
